# EUROPÄISCHE PATENTSCHRIFT

(11) **EP 0 799 566 B1**
(45) Veröffentlichungstag und Bekanntmachung des Hinweises auf die Patenterteilung: **24.02.1999**
(21) Anmeldenummer: 97105084.4
(22) Anmeldetag: 26.03.1997
(51) Int. Cl.: A01K 9/00

(54) **Tränkeautomat für Tiere**
Automatic liquid dispenser
Distributeur automatique de liquides

(30) Priorität: 03.04.1996 DE 29606172 U
(43) Veröffentlichungstag der Anmeldung: 08.10.1997
(73) Patentinhaber: Förster, Martin, 78234 Engen (DE)
(72) Erfinder: Förster, Martin, 78234 Engen (DE)
(74) Vertreter: Weiss, Peter, Dr. rer. nat.

(56) Entgegenhaltungen:
- FR-A- 1 505 936

## Beschreibung

Die Erfindung betrifft einen Tränkeautomat für Tiere, insbesondere Kälber mit einem Mischbehälter, welchem Zuleitungen für eine Flüssigkeit und eine Auswurföffnung für einen Feststoff zugeordnet sind.

Derartige Tränkeautomaten für Tiere sind in vielfältiger Form und Ausführung auf dem Markt. Nur beispielsweise wird auf das Deutsche Gebrauchsmuster 295 09 529.6 verwiesen. Diese Tränkeautomaten dienen vor allem dem Füttern von Kälbern, sie werden jedoch auch zum Füttern von Schafen, Lämmern und anderen Tieren verwendet.

Wesentlich bei derartigen Tränkeautomaten ist, daß in einer Mischeinrichtung das Anrühren des Futtermittels erfolgt. Bei jungen Tieren handelt es sich vor allem um das Anmischen eines Milchmixgetränkes, wobei Milchpulver mit Wasser vermischt wird. Bei älteren Tieren wird Kraftfutter mit einer Flüssigkeit vermischt. Ferner ist auch die Zugabe beispielsweise einer Medizin als Feststoff in den Mischbehälter der Mischeinrichtung vorgesehen.

Meist befindet sich der entsprechende Feststoff in einem Vorratsbehälter oder -trichter und wird über eine entsprechende Dosiereinrichtung aus der Auswurföffnung in den Mischbehälter ausgeworfen. Da der Mischbehälter relativ nahe an der Auswurföffnung angeordnet und die Flüssigkeit meist stark erwärmt ist, steigt Flüssigkeits-dampf aus dem Mischbehälter auf und schlägt sich in oder an der Auswurföffnung nieder. Dieser Niederschlag vermischt sich dann mit dem Feststoff, so daß es zu einem Verkleben von Bereichen der Auswurföffnung kommt. Dies ist sehr unerwünscht, so daß die Auswurföffnung von Zeit zu Zeit gereinigt werden muß.

Der vorliegenden Erfindung liegt die Aufgabe zugrunde, ein derartiges Verkleben der Auswurföffnung zu vermeiden.

Zur Lösung dieser Aufgabe führt zum einen, daß der Auswurföffnung eine Heizeinrichtung zugeordnet ist.

Diese Heizeinrichtung hat den Vorteil, daß der Taupunkt des aufsteigenden Dampfes soweit angehoben wird, daß sich dieser Dampf nicht an der Auswurföffnung niederschlägt. Damit kann es auch nicht zu einem Verbinden mit dem Feststoff kommen, so daß wirksam ein Verkleben der Auswurföffnung vermieden wird.

Damit wird auch erreicht, daß die Dosiereinrichtung ungestört von anhaftenden Feststoffen arbeiten kann.

Bei einem anderen Ausführungsbeispiel der Erfindung, welche auch mit der ersten Möglichkeit gekoppelt sein kann, soll der Bereich der Auswurföffnung und insbesondere der Boden mit einer speziellen Beschichtung versehen sein. Diese Beschichtung muß ein Anhaften der Feststoffe verhindern.

Hier bietet sich beispielsweise eine entsprechende Folie, eine Kunstharzbeschichtung oder auch Teflon an. Auf einer derartigen Beschichtung kann sich kein Flüssigkeitstropfen absetzen, damit kann es auch nicht zu einer Vermengung von Flüssigkeit und Feststoff und zu einem Verkleben der Auswurföffnung kommen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Grundansicht eines Tränkeautomates;
Figur 2 eine Ansicht eines Ausschnittes aus dem Tränkeautomaten gemäß Figur 1.

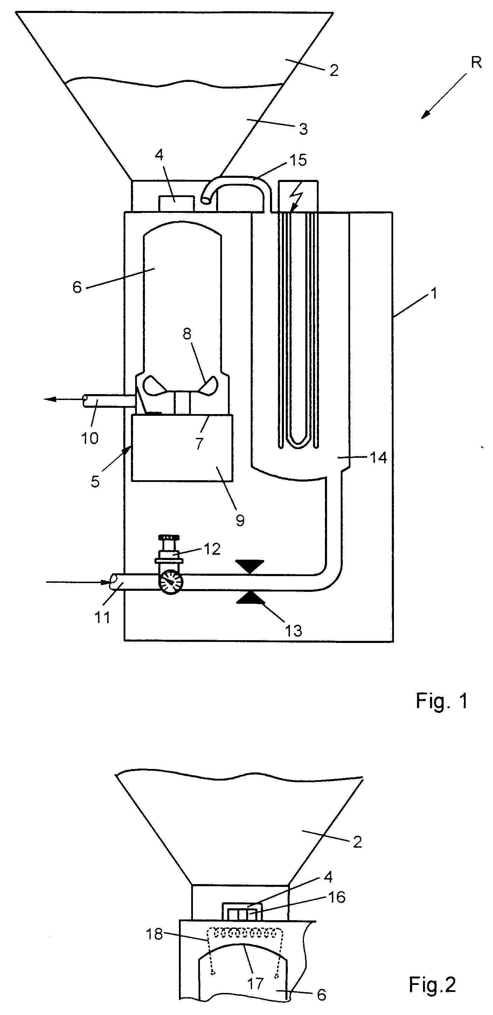

Ein Tränkeautomat R weist gemäß Figur 1 ein schematisch dargestelltes Gehäuse 1 auf, dem ein trichterförmiger Vorratsbehälter 2 zur Aufnahme eines Milchpulvers 3 aufgesetzt ist. Dieses Milchpulver 3 gelangt aus einer Auswurföffnung 4 dosiert in eine Mischeinrichtung 5.

Die Mischeinrichtung 5 sieht einen meist durchsichtigen, Mischbehälter 6 vor, nahe dessen Behälterboden 7 sich ein Rührer 8 befindet. Dieser Rührer 8 wird von einem nur schematisch dargestellten Motor 9 angetrieben. Eine in dem Mischbehälter 6 hergestellte Mischung gelangt über eine Leitung 10 zu einer nicht näher dargestellten Tränke.

In dem Mischbehälter 6 erfolgt eine Mischung des Milchpulvers 3 mit einer Flüssigkeit, bevorzugt mit Wasser. Dieses Wasser wird von einer Zuleitung 11 herangeführt, durchfließt im vorliegenden Ausführungsbeispiel einen Druckminderer 12 und ein nur schematisch dargestelltes Magnetventil 13, bevor es in einen Boiler 14 gelangt. In dem Boiler 14 wird das Wasser aufgeheizt, wobei dann das erwärmte Wasser über einen Auslauf 15 in den Mischbehälter 6 eingefüllt wird.

In Figur 2 ist ein Ausschnitt aus dem Tränkeautomaten R im Bereich der Auswurföffnung 4 gezeigt. Dabei ist in der Auswurföffnung 4 eine Dosiereinrichtung 16 erkennbar, die beispielsweise ein Zellenrad, eine Schnecke oder ein Schubförderer sein kann. Mit dieser Dosiereinrichtung 16 wird dosiert ein Feststoff bzw. das Milchpulver aus dem Vorratsbehälter 2 ausgetragen und gelangt in den Mischbehälter 6. Deshalb ist ein oberer Rand 17 des Mischbehälters 6 relativ nahe an der Auswurföffnung 4 angeordnet.

Erfindungsgemäß ist dieser Auswurföffnung 4 eine Heizeinrichtung 18 zugeordnet. Hierdurch wird der Taupunkt des Dampfes der Flüssigkeit, welche sich in dem Mischbehälter 6 befindet, angehoben, so daß es nicht zu einem Niederschlag von Dampf im Bereich der Auswurföffnung 4 kommt. Hierdurch wird ein Verkleben der Auswurföffnung 4 mit Feststoff wirksam verhindert.

Ähnliches wird auch dadurch erreicht, daß der Bereich der Auswurföffnung 4 mit einem Werkstoff beschichtet wird, der ein Anhaften von Feststoff verhindert. Dies kann beispielsweise eine entsprechende Folie oder auch Teflon sein.

## Patentansprüche

1. Tränkeautomat für Tiere, insbesondere Kälber, mit einem Mischbehälter (6), welchem Zuleitungen (11, 15, 4) für eine Flüssigkeit und eine Auswurföffnung (4) für einen Feststoff zugeordnet sind,
dadurch gekennzeichnet,
daß der Auswurföffnung (4) eine Heizeinrichtung (18) zugeordnet ist.

2. Tränkeautomat für Tiere, insbesondere Kälber, mit einem Mischbehälter (6), welchem Zuleitungen (11, 15, 4) für eine Flüssigkeit und eine Auswurföffnung (4) für einen Feststoff zugeordnet sind, dadurch gekennzeichent, daß zumindest ein Boden der Auswurföffnung (4) mit einem Haftverhinderer, beispielsweise einer Folie, Teflon od. dgl., beschichtet ist.

## Claims

1. Automatic liquid dispenser for animals, more especially calves, having a mixing container (6), with which pipes (11, 15, 4) for supplying a liquid and a discharge opening (4) for supplying a solid are associated, characterised in that a heating means (18) is associated with the discharge opening (4).

2. Automatic liquid dispenser for animals, more especially calves, having a mixing container (6), with which pipes (11, 15, 4) for supplying a liquid and a discharge opening (4) for supplying a solid are associated, characterised in that at least one base of the discharge opening (4) is coated with an adhesion inhibitor, for example a film, Teflon or the like.

## Revendications

1. Distributeur automatique de liquide destiné à des animaux, en particulier des veaux, comprenant un récipient mélangeur (6) auquel sont associés des conduites (11, 15, 4) d'amenée d'un liquide et une ouverture de sortie (4) pour une matière solide,
caractérisé en ce que
à l'ouverture de sortie (4) est associé un dispositif de chauffage.

2. Distributeur automatique de liquide destiné à des animaux, en particulier des veaux, comprenant un récipient mélangeur (6) auquel sont associées des conduites (11, 15 4) d'amenée d'un liquide et une ouverture de sortie (4) pour une matière solide,
caractérisé en ce que
au moins un fond de l'ouverture de sortie est garni d'un revêtement anti-adhésif, par exemple une pellicule du Téflon ou produit analogue.
